# EUROPÄISCHE PATENTSCHRIFT

(11) **EP 2 781 145 B1**
(45) Veröffentlichungstag und Bekanntmachung des Hinweises auf die Patenterteilung: **24.02.2016**
(21) Anmeldenummer: 14158797.2
(22) Anmeldetag: 11.03.2014
(51) Int. Cl.: A01B 13/02

(54) **Scheibenräumgerät und Verfahren zur Herstellung von Saatstreifen für die Waldsaat von Nadelbaumarten**
Disc clearing apparatus and method for the preparation of seed strips for the forest seeding of conifers
Scarificateur à disques et procédé de fabrication de bandes de semences pour des semences forestières de conifères

(30) Priorität: 21.03.2013 DE 102013004855
(43) Veröffentlichungstag der Anmeldung: 24.09.2014
(73) Patentinhaber: Schmidt, Robert, 09627 Sohra (DE)
(72) Erfinder: Schmidt, Robert, 09627 Sohra (DE)
(74) Vertreter: Hauck Patentanwaltspartnerschaft mbB

(56) Entgegenhaltungen:
- DE-C- 450 758
- US-A- 5 477 931
- US-B1- 6 330 922

## Beschreibung

Die Erfindung bezieht sich auf ein Scheibenräumgerät nach Anspruch 1 und auf ein Verfahren zur Herstellung von Saatstreifen für die Waldsaat von Nadelbaumarten nach Anspruch 11.

Zur künstlichen Waldverjüngung werden derzeit meistens mehrjährige Forstpflanzen verwendet, die in Baumschulen aufgezogen wurden. Aus vielerlei Gründen werden gegenwärtig Saaten nur in geringem Umfang praktiziert. Die Ursachen dafür liegen oft in Saatgutengpässen, aber auch im Mangel an geeigneter Technik. So werden die Arbeiten zum Teil noch rein manuell oder mit modifizierten Geräten ausgeführt. Meist finden dabei für Forstkulturen oder Voranbauten konstruierte Waldstreifenflüge (z.B. Typ "Waldmeister" oder der finnische Scheibenpflug "TTS-35") bzw. Bodenfräsen (z.B. "PEIN PLANT") Verwendung. Plätzeweise Bodenfreilegungen erfolgen mit diversen Baggern, Schlägelgeräten oder Erdlochbohrungen (z.B. "LOBO"). Neuerdings wird zur Förderung der Kiefernnaturverjüngung der "Kulla-Kultivator" erprobt (Dreipunktaufhängung, 60-80 PS Schlepper, 4x3 Eingriffswerkzeuge, Arbeitstiefe 10cm). All diesen Verfahren ist eine starke Veränderung des Oberbodengefüges, häufige Verletzungen an Stämmen und Wurzeln sowie ein hoher Energieaufwand eigen.

Als spezielle Waldsähmaschine existiert das im Betrieb störanfällige Modell "Sämagrub" der Firma Treu. Dabei handelt es sich um ein Anbaugerät für Traktoren mit zwei federnd gelagerten Vulkolanscharen im Abstand von 1m. Saattiefen bis 10cm sind möglich.

Des Weiteren befindet sich in ganz geringer Stückzahl die Sähmaschine "ÖkoSat/U" (Modell 120-2-B) im praktischen Einsatz. Zwei glatte Scheibenseche, die zur Horizontalen geneigte Achsen haben, sodass sie am Tiefpunkt einander näher als am Hochpunkt sind, erzeugen eine Rille im Boden, in die Samen aus einem mitgeführten Vorratsbehälter abgelegt werden. Eine nachlaufende Walze schließt die Rille. Dieses Gerät ist ähnlich wie "Sämagrub" mehr für schwersamige Laubbaumarten geeignet. Es kann durch Zugtiere oder Zugmaschinen bewegt werden. Beide Maschinen schaffen nicht den für leichtsamige Nadelbaumarten notwendigen innigen Bodenkontakt bei nur geringer Bodenabdeckung. Ebenso ist die erforderliche Zurückdrängung der Konkurrenz durch die Bodenflora nicht gewährleistet. Somit besteht auf diesem Sektor technischer Nachholbedarf.

Die bekannten Geräte zur Herstellung von Saatstreifen unterteilen sich in Forstpflüge, Fräsen und rotierende Geräte und Forstgrubber. Bei all diesen Geräten gehört das Arbeiten gegen den Widerstand des Bodens zum permanenten Funktionsprinzip. Alle einwirkenden Kräfte (Zugwiderstandskraft, Kippkraft, Hindernisse wie Wurzeln und Steine) werden undifferenziert überwunden bzw. beseitigt. Die Maschine bahnt sich den Weg und legt die Arbeitsrichtung fest. Die Kräfte können sich summieren und benötigen aufgrund der unberechenbaren Waldumgebung große Zugkraftreserven und entsprechend stabile Konstruktionen. Das hat hohe Gerätegewichte, Arbeitstiefen und breite Durchfahrtbreiten zur Folge. Die auftretenden Kräfte werden vom Zuggerät aufgebracht und auf dieses übertragen und bedingen hohe Maschinengewichte.

Die Pflüge wenden den Boden, die Fräsen vermischen die Bodenhorizonte und die Grubber ziehen die Deckschicht des Bodens ab. Dies führt zur Auswaschung von Nährstoffen und langanhaltenden Störungen des Kapillarsystems und des Edaphons. Bodenfräsen und rotierende Geräte (z.B. Motorhacken) vermengen permanent die Bodenstrukturen und errichten ein starres System von bearbeiteten Flächen im natürlichen Umfeld.

Aus DE 450 758 C ist ein Scheibenräumgerät bekannt geworden mit einem Geräteträger, der eine Geräteträgerlängsachse aufweist, einer Stützachse mit Rädern an den beiden Enden, die mit dem vorderen Ende des Geräteträgers verbunden und quer zur Geräteträgerlängsachse ausgerichtet ist. Drehlagerelemente am Geräteträger weisen auf beiden Seiten der Geräteträgerlängsachse jeweils spitzwinklig nach vorn bezüglich der Geräteträgerlängsachse gerichtete Drehlager auf. Zwei schalenförmig gewölbte Scheiben, die jeweils ein zentrales zweites Drehlagerelement aufweisen, sind an einem ersten Drehlagerelement gelagert, wobei die Scheiben auf verschiedenen Seiten der Geräteträgerlängsachse angeordnet und mit ihren bauchigen Seiten einander zugewandt sind. Schließlich ist ein Kupplungsmittel an der Stützachse vorgesehen oder am Geräteträger zum Ankuppeln einer Zugkraftquelle. Das bekannte Gerät ist zur Herstellung eines Pflugstreifens mit aufgeworfenen Schollen und bewusster Veränderung der Bodenstruktur konzipiert, um Pflanzen von ein- bis zweijährigen Kiefern zu ermöglichen.

Folgende Vorüberlegungen liegen der Erfindung zugrunde: Anliegen der Erfindung ist die Schaffung eines Geräts, das teilmechanisierte Waldsaaten unter möglichst naturnahen Bedingungen möglich macht. Dabei darf der Waldboden nur gering beeinflusst werden. Arbeitsbedingte Bodenverdichtungen, insbesondere durch flächige Befahrung, sind zu vermeiden und der aufstockende Altbestand ist weitgehend zu schonen. Die Saaten sollen unter verschiedenen Schirmbeständen, aber auch auf Freiflächen möglich sein. Das Gerät soll auf den verschiedensten Waldstandorten einsetzbar sein.

Leitbild für den Verjüngungsvorgang ist die natürliche Verjüngung der heimischen Baumarten. Das Gerät soll als Modul einer Ökotechnologie zur Mechanisierung von Waldsaaten speziell für die Ansprüche der Nadelbaumarten dienen.

Ziel ist der ökologisch und ökonomisch vorteilhafte Aufbau stabiler, leistungsstarker, standortsgerechter multifunktionaler Mischbestände. Dafür muss das Gerät geländegängig und robust sein. Um den Waldboden zu schonen, sollte es leicht und mit nur geringem Energieaufwand zu betreiben sein. Einfache Konstruktion und Verschleißfreiheit sollen einen kostengünstigen Betrieb und damit auch die Anschaffung für kleine Unternehmen ermöglichen.

Das Gerät soll folgenden Arbeitsanforderungen genügen: Grundvoraussetzung für das Gelingen der Waldsaat bei Nadelbaumarten ist eine Beräumung des künftigen Saatbettes von Bodenvegetation oder Rohhumus bis auf den anstehenden Mineralboden. Dabei soll der freigelegte Oberboden, besonders der Ah-Horizont(A = oberste Schicht des Mineralbodens; h = mit Humusanreicherung), möglichst nicht verändert werden. Der Ah-Horizont ist das ideale Keimmedium, welches sich durch günstige Wasserversorgung und Wasserspeicherung auszeichnet. Vorstehende Forderung unterliegt in zertifizierten Forstbetrieben weiteren Einschränkungen. Laut PEFC-Standard (2009) muss auf ganzflächige in den Mineralboden eingreifende Bodenbearbeitung verzichtet werden. "Eine schonende Bodenverwundung sowie eine plätzeweise und streifenweise Bodenbearbeitung ist zulässig, wenn die Einleitung der Verjüngung auf anderem Wege nicht möglich ist".

Erfahrungen aus der künstlichen Walderneuerung der Kiefer sprechen für die Anwendung eines kontinuierlich arbeitenden Verfahrens, wodurch für das Saatbett ein freigeräumter bzw. abgeschälter Streifen von 30 bis 50 cm Breite notwendig ist. Diskontinuierlich arbeitende Verfahren wären zwar ökologisch vorteilhafter, technologisch aber nachteilig, da der Arbeitsfluss laufend unterbrochen werden muss. Auch bei den nachfolgenden Pflege- und Erziehungsmaßnahmen am Jungwuchs sind geordnete Baumreihen zweckmäßiger zu bearbeiten als heterogene Baumverteilungen auf Plätzen.

Erfahrungen aus der Konstruktion von Voranbau-Pflügen und Pflanzmaschinen sprechen für rollende Werkzeuge. Gegenüber den starren Pflugscharen zeichnen sich diese durch geringen Bodenwiderstand und damit weniger Zugkraftbedarf aus. Durch das Überrollen von Steinen, Wurzeln und anderen Hindernissen werden Stockungen im Arbeitsverlauf sowie übermäßige Materialbeanspruchungen am Gerät vermieden und damit ein kontinuierliches Arbeiten gewährleistet. Rollende Arbeitswerkzeuge gestatten auch eine flexiblere Linienführung des Streifens (Umfahren von Bäumen, Felsen, Nassstellen, Anpassung an die Handneigung). An den Grobwurzeln der Bäume treten durch das Überrollen nur geringe Schäden auf. Die Feinwurzeln werden im Gegensatz zum Pflugschar nicht abgerissen oder zerfasert, sondern glatt abgetrennt, was letztlich einen besseren Wundverschluss und die raschere Regeneration der Wurzeltracht bewirkt.

Der Erfindung liegt somit die Aufgabe zugrunde, ein verbessertes Gerät und Verfahren zur Herstellung von Saatstreifen für die Waldsaat von Nadelbaumarten zur Verfügung zu stellen.

Die Aufgabe wird durch ein Scheibenräumgerät mit den Merkmalen von Anspruch 1 gelöst.

Das erfindungsgemäße Scheibenräumgerät zur Herstellung von Saatstreifen für die Waldsaat von Nadelbaumarten hat
- einen Geräteträger, der eine Geräteträgerlängsachse aufweist,
- eine Stützachse mit Rädern an den beiden Enden, die mit dem vorderen Ende des Geräteträgers verbunden und quer zur Geräteträgerlängsachse ausgerichtet ist,
- erste Drehlagerelemente am Geräteträger auf beiden Seiten der Geräteträgerlängsachse, die jeweils spitzwinklig nach vorn bezüglich der Geräteträgerlängsachse gerichtete Drehlagerachsen aufweisen,
- zwei schalenförmig gewölbte Scheiben, die jeweils ein zentrales zweites Drehlagerelement aufweisen, das an einem ersten Drehlagerelement gelagert ist, wobei die beiden Scheiben auf verschiedenen Seiten der Geräteträgerlängsachse angeordnet und mit ihren bauchigen Seiten einander zugewandt sind und
- ein Kupplungsmittel an der Stützachse und/oder am Geräteträger zum Ankuppeln einer Zugkraftquelle.

Das erfindungsgemäße Scheibenräumgerät (Gerät) wird in Richtung des vorderen Endes des Geräteträgers von einem Zugtier, einem Traktor, einer Seilwinde oder einer anderen Zugkraftquelle über den Boden gezogen. Die Zugkraftquelle wird beispielsweise über ein Zuggeschirr mit dem Kupplungsmittel des Scheibenräumgeräts verbunden. Vorzugsweise wird mit einer Zuggeschwindigkeit von 3 bis 4km/h gearbeitet.

Das Scheibenräumgerät stützt sich vorn über die Räder an der Stützachse und hinten ausschließlich über die Scheiben am Boden ab. Beim Ziehen des Scheibenräumgeräts rollen die Räder und Scheiben ab und die Scheiben dringen in den Boden ein. Dabei schälen sie den überfahrenen Boden seitwärts ab. Die Wölbung der Scheiben lockert dabei das verdrängte Bodenmaterial, ohne es vertikal zu vermengen. Das Bodenmaterial wird beidseitig der Scheiben auf dem Waldboden abgelagert.

Die jeweilige Arbeitstiefe der Scheiben im Boden wird mittels des auf die Scheiben wirkenden Gewichts am Geräteträger eingestellt. Das Eigengewicht des Scheibenräumgeräts kann je nach Bodenzustand durch ein oder mehrere Gewichte ergänzt werden, die auf den Mitteln zum Lagern eines Gewichts gelagert werden. Das auf die Scheiben wirkende Gewicht kann durch Gewichtsstücke oder dadurch erhöht werden, dass sich der Geräteführer mit seinem Körpergewicht auf die Mittel zum Lagern stellt. Reduziert man an Hindernissen das auf die Scheiben wirkende Gewicht, so reduziert sich die aufzubringende Zugkraft. Dies kann der Geräteführer leicht durch Absteigen vom Gerät erreichen.

Die Drehbewegung der Scheiben lässt diese über eventuelle Hindernisse rollen und verringert den Zugwiderstand.

Insgesamt ist die erforderliche Arbeitsenergie für das Ziehen des Geräts und Einschneiden der Scheiben in den Boden gering. Dies ermöglicht es, das Gerät ohne maschinelle Kraftunterstützung zu betreiben.

Der Winkel, den die Drehlagerachsen, die spitzwinklig zur Horizontalen geneigt sind, mit der Geräteträgerlängsachse einschließen, beeinflusst das Verhältnis der Breite und der Tiefe des Saatstreifens, der mittels des Scheibenräumgeräts hergestellt wird. Der Saatstreifen umfasst zwei parallele, U-förmige Streifen, zwischen denen ein Mittelsteg aus gewachsenem Boden verbleibt. Vorzugsweise wird die Gewichtsbelastung der Scheiben so eingestellt, dass diese in zwei parallelen Streifen den Auflagehumus von der Mineralbodenschicht abscheren, wobei in den beiden Streifen der Mineralboden freigelegt wird. Zwischen den beiden Streifen verbleibt ein Mittelsteg aus gewachsenem Boden.

Bedingt durch den Anstellwinkel bilden die beiden Scheiben zueinander ein gegenläufiges Kräftepaar. Auftretende Seitenkräfte heben sich auf und stabilisieren oder korrigieren die Arbeitsrichtung. Wirkt auf eine der Scheiben eine höhere Widerstandskraft, durch mehr Boden oder ein Hindernis, so dreht die andere Scheibe so lange schneller, bis auf beide Scheiben dieselbe Widerstandskraft einwirkt. Hierdurch wird permanent die Arbeitsrichtung korrigiert, wobei die Scheiben stets so tief wie gerade möglich in den Boden eindringen. Zudem wird hierdurch dem Geräteführer die günstigste Arbeitslinie signalisiert. Im Ergebnis begründet eine Kombination aus einem selbsttätigen Justieren des Geräts und der Steuerung des Geräts durch den Geräteführer aufgrund seines fachlichen Wissens über die räumliche Anordnung nach den Bedürfnissen der Baumart und des Waldbaus den neuen Waldbestand.

Im optimalen Zugbetrieb verhindern die auf beide Scheiben wirksamen Kräfte ein Kippen des Geräts. Kommt es durch Hindernisse oder Stillstand zum Wegfall dieser Stabilisierungswirkung, wird das Gerät durch die Stützachse aufrecht gehalten. Die Räder der Stützachse und der Aufstandspunkt der Scheiben bilden dabei ein stabiles Dreieck. Aufgrund des niedrigen Schwerpunkts des Geräts sind die seitlichen Kippkräfte verhältnismäßig klein. An Hängen, an Gräben und anderem schwierigem Gelände kann durch den Geräteführer eine zusätzliche Stabilisierung erfolgen, indem sich dieser so auf die Mittel zum Lagern stellt, dass sein Körpergewicht die Kippkräfte aufhebt.

Bevorzugt ist das Scheibenräumgerät so ausgebildet, dass ein Saatstreifen mit einem UU-Profil mit einer Breite von 30 bis 50 cm als Keimbett für Waldsamen entsteht und der Mittelsteg zwischen den beiden Streifen eine Breite von 1-10cm, vorzugsweise von etwa 5cm aufweist.

Das Eigengewicht des Geräts und somit der Druck des Geräts auf den Boden kann gering gehalten werden. Eine praktische Ausführung hat ein Gesamtgewicht von 150 kg, die sich auf die Räder und die Scheiben aufteilen.

Die Gerätebreite kann ebenfalls gering gehalten werden, wodurch eine Durchfahrt auch in dichten und jüngeren Waldbeständen ermöglicht wird. Bei einer praktischen Ausführung beträgt die Gerätebreite 1,5 m. Die Gerätelänge kann ebenfalls gering gehalten werden, sodass bei Entlastung der Stützachse ein Wenden auf der Stelle möglich ist. Die Gerätelänge beträgt bei einer praktischen Ausführung 2 m.

Das Gerät ist preiswert, robust und langlebig herstellbar.

Dadurch, dass die auftretenden Widerstände konstruktionsbedingt innerhalb des Geräts neutralisiert werden oder dessen Arbeitsrichtung verändern, wird ein eigenständiges Gerät ermöglicht, das keine Zugmaschine als Gegengewicht benötigt. Die Gesamtmaschinengewichte und der benötigte Kraftaufwand und damit die Durchfahrtsbreiten und Traktionsschäden im Wald werden durch die bauartbedingte Arbeitsweise stark verringert. Die Arbeitsweise des Geräts passt sich an den vorhandenen Waldbestand, Terrain und Boden an.

Ein weiterer wesentlicher Vorteil des Geräts ist, dass es den Boden verdrängt, ihn aber nicht wendet wie ein Pflug. Somit wird die Bearbeitung des Bodens auf die wesentlichen Anforderungen für die Keimung des Samens beschränkt. Schäden am Waldbestand und am Waldboden werden so auf ein Minimum reduziert.

Der Einsatz des Geräts garantiert bei weitgehender Ausnutzung von Naturkräften die Naturnähe des Saatvorgangs. Dadurch bleibt der Energieaufwand für die Wandverjüngung sehr niedrig. Im Gegensatz zu anderen Methoden werden Waldboden und Bestand durch das Gerät nur wenig beeinflusst. Die hergestellten Saatstreifen sind mit den Zertifizierungsnormen konform. Mit dem Scheibenräumgerät ist es möglich, flexibel auf die im Wald sehr häufigen kleinflächigen Unterschiede in Standort und Bodenvegetation zu reagieren. Dadurch wird eine Vielfalt an Baumartenmischungen und Strukturen ermöglicht. Durch hohe Pflanzenzahlen bestehen gute Voraussetzungen zur bestmöglichen Etablierung der Verjüngung auf den geeigneten Standorten. Gleichzeitig wird damit eine breite genetische Variation erhalten, was zur bestmöglichen Ausschöpfung der natürlichen Standortpotentiale beiträgt. Durch die natürliche Ausbildung der Wurzelsysteme ist eine höhere Stabilität, Flexibilität und ein besseres Wachstum der gesäten Waldbestände im Vergleich zu bepflanzten Beständen zu erwarten. Dies beruht vor allem auf der natürlichen Wurzelentwicklung am Standort und dem Wegfall von Wurzelbeschädigungen und Anwuchsproblemen ("Pflanzschock"). Zudem ist dies auf die Nichtverwendung von Düngemitteln und damit einer geringeren Attraktivität für Wildverbiss zurückzuführen. Schließlich wird durch die Standortfaktoren eine Differenzierung der Individuen ausgelöst, die eine natürliche Selektion bewirken. Insgesamt ist die Waldsaat von Nadelbaumarten mit Hilfe des erfindungsgemäßen Scheibenräumgeräts relativ sicher, pflegeleicht und kostengünstig.

Gemäß einer Ausgestaltung des Scheibenräumgeräts weist der Geräteträger einen ersten Profilträger auf, dessen vorderes Ende mit der Stützachse verbunden ist. Vorzugsweise ist das vordere Ende des Geräteträgers mit der Mitte der Stützachse verbunden. Der Profilträger ermöglicht eine besonders gewichts- und kostensparende Ausführung des Geräteträgers. Die Geräteträgerlängsachse fällt mit der Mittelachse des Profilträgers zusammen. Die Geräteträgerlängsachse ist senkrecht zur Stützachse ausgerichtet. Der Profilträger ist vorzugsweise ein Vierkantprofil. Weiterhin vorzugsweise besteht der Profilträger aus Stahl.

Gemäß einer weiteren Ausgestaltung ist der Geräteträger über erste Mittel zum lösbaren Verbinden lösbar mit der Stützachse verbunden. Diese Ausgestaltung ermöglicht einen leichten Transport des Scheibenräumgeräts nach Lösen des Geräteträgers von der Stützachse und eine leichte Montage und Demontage des Scheibenräumgeräts am Einsatzort.

Gemäß einer weiteren Ausgestaltung ist das vordere Ende des Profilträgers in eine komplementäre erste Aufnahmebuchse eingesetzt, die mit der Stützachse fest verbunden ist, und sichert ein erster Sicherungsstift oder ein anderes erstes Sicherungselement das vordere Ende des ersten Profilträgers in der ersten Aufnahmebuchse.

Der Geräteträger weist auf jeder Seite der Geräteträgerlängsachse mindestens einen Scheibenträger auf, der eine spitzwinklig nach hinten bezüglich der Geräteträgerlängsachse geneigte Scheibenträgerlängsachse hat und sind die ersten Drehlagerelemente jeweils am hinteren Ende eines Scheibenträgers angeordnet. Diese Konstruktion ermöglicht eine besonders einfache Lagerung der beiden Scheiben. Zudem ist sie besonders stabil.

Gemäß einer weiteren Ausgestaltung weisen die Scheibenträger jeweils einen zweiten Profilträger auf, der vorn mit dem Geräteträger verbunden ist und hinten eine quer zur Scheibenträgerlängsachse gerichtete Lagerplatte aufweist, an der ein erstes Drehlagerelement befestigt ist. Die Scheibenträgerlängsachse fällt mit der Mittelachse des zweiten Profilträgers zusammen. Der zweite Profilträger ist vorzugsweise ein Vierkantprofil. Vorzugsweise besteht der zweite Profilträger aus Stahl.

Gemäß einer bevorzugten Ausgestaltung ist die Drehachse jedes ersten Drehlagerelements senkrecht zur Scheibenträgerlängsachse ausgerichtet.

Gemäß einer weiteren Ausgestaltung weist das Scheibenräumgerät auf jeder Seite der Geräteträgerlängsachse zwei parallele Scheibenträger auf, an deren hinteren Enden jeweils ein erstes Drehlagerelement angeordnet ist, an denen eine Scheibe mit einem zweiten Drehlagerelement gelagert ist. Hierdurch wird eine besonders einfache und stabile Lagerung der Scheiben erreicht.

Wie schon erwähnt, sind die Drehlagerachsen der ersten Drehlagerelemente spitzwinklig zur Horizontalen geneigt, sodass die beiden Scheiben am Tiefpunkt ihres Umfangs einander näher sind als am Hochpunkt ihres Umfangs. Hierdurch wird ein energiesparendes Herstellen eines Saatstreifens mit UU-Profil unter seitlicher Ablage des abgescherten Auflagehumus ohne vertikale Vermischung weiter verbessert. Gemäß einer weiteren Ausgestaltung sind auf jeder Seite der Geräteträgerlängsachse zwei parallele Scheibenträger angeordnet, wobei jeweils der vordere Scheibenträger vorn mit der Unterseite des ersten Profilträgers fest verbunden ist und der hintere Scheibenträger weiter oben mit dem ersten Profilträger verbunden ist. Durch den Höhenversatz zwischen dem vorderen und dem hinteren Scheibenträger wird die spitzwinklige Neigung der Drehlagerachsen zur Horizontalen erreicht.

Gemäß einer weiteren Ausgestaltung beträgt der spitze Winkel zwischen jeder Drehlagerachse und der Geräteträgerlängsachse 15° bis 50°, vorzugsweise 30° bis 35°, weiterhin vorzugsweise etwa 33° und/oder der spitze Winkel jeder Drehlagerachse zur Horizontalen 15° bis 60°, vorzugsweise 30° bis 40°, weiterhin vorzugsweise etwa 35°.

Gemäß einer weiteren Ausgestaltung haben die gewölbten Scheiben einen Durchmesser von 500 bis 900 mm, vorzugsweise von 600 bis 800 mm, weiterhin vorzugsweise von etwa 710 mm. Gemäß einer weiteren Ausgestaltung beträgt die Tiefe der gewölbten Scheiben (= Abstand einer Ebene durch den Rand von einer parallelen Ebene durch das Zentrum der Schale) 80-150 mm, vorzugsweise 110 bis 130 mm, weiterhin vorzugsweise etwa 120 mm. Weiterhin vorzugsweise beträgt die Materialstärke der gewölbten Scheiben 3-10 mm, vorzugsweise etwa 6 mm. Weiterhin vorzugsweise sind die Scheibenränder nach außen verjüngt, insbesondere angeschliffen. Vorzugsweise bestehen die Scheiben aus Stahl, weiterhin vorzugsweise aus Bohrstahl vergütet auf 48 - 51 HRC.

Gemäß einer weiteren Ausgestaltung weisen die Mittel zum Lagern mindestens eines Gewichts eine horizontale Gewichtsplattform auf. Gemäß einer weiteren Ausgestaltung ist die Gewichtsplattform hinter dem Geräteträger angeordnet. Hierdurch wirkt das Gewicht über einen Hebel auf die Scheiben, wodurch der erforderliche Gewichtseinsatz und der Energieaufwand für den Betrieb des Geräts verringert wird.

Gemäß einer weiteren Ausgestaltung ist die Gewichtsplattform fest mit dem hinteren Ende des Geräteträgers verbunden.

Gemäß einer weiteren Ausgestaltung ist am vorderen Ende der Gewichtsplattform eine hochstehende Personenschutzwand vorhanden. Die Personenschutzwand hält eine Person von dem Arbeitsbereich zwischen den beiden Scheiben ab. Gemäß einer weiteren Ausgestaltung ist die Personenschutzwand mit dem hinteren Ende des Geräteträgers und/oder mit dem vorderen Ende der Gewichtsplattform fest verbunden.

Gemäß einer weiteren Ausgestaltung weist das Scheibenräumgerät vor der Gewichtsplattform einen Griff auf, der so positioniert ist, dass sich eine auf der Gewichtsplattform stehende Person am Griff festhalten kann. Dies erleichtert das Steuern des Scheibenräumgeräts im unebenen Gelände. Gemäß einer weiteren Ausgestaltung ist der Griff über zweite Mittel zum lösbaren Verbinden lösbar mit dem Geräteträger verbunden. Für den Transport kann der Griff leicht vom Scheibenräumgerät getrennt und am Einsatzort leicht mit dem Scheibenräumgerät verbunden werden. Hierzu weist gemäß einer bevorzugten Ausgestaltung der Griff eine Griffstange auf, die am oberen Ende mit einem Griffbügel verbunden ist und am unteren Ende in eine zweite Aufnahmebuchse eingesteckt ist, die vom Geräteträger hochsteht und fest mit diesem verbunden ist, und sichert ein zweiter Sicherungsstift oder ein anderes zweites Sicherungselement das untere Ende der Griffstange in der zweiten Aufnahmebuchse.

Gemäß einer weiteren Ausgestaltung umfasst das Kupplungsmittel eine Zugpunktvorrichtung. Mittels der Zugpunktvorrichtung kann der Zugpunkt in mehreren (z.B. drei) Stufen auf die Arbeitstiefe angepasst werden. Gemäß einer Ausgestaltung weist das Kupplungsmittel einen von der Mitte der Stützachse hochstehenden Kupplungskopf mit mindestens einem Loch zum Fixieren eines Zugmittels auf. Gemäß einer bevorzugten Ausgestaltung weist der Kupplungskopf mehre Löcher in verschiedener Höhe auf, sodass die Arbeitstiefe durch Fixieren des Zugmittels an verschiedenen Löchern beeinflussbar ist.

Ferner sieht die Erfindung ein Verfahren mit den Merkmalen von Anspruch 11 vor.

Bei dem erfindungsgemäßen Verfahren zum Herstellen von Saatstreifen für die Waldsaat von Nadelbaumarten wird entlang zweier paralleler Streifen der Auflagehumus und die Bodengevegetation, wenn vorhanden, von der Mineralbodenschicht des Waldbodens abgeschert und an den äußeren Längsseiten der beiden Streifen auf dem angrenzenden Waldboden abgelegt. Dabei wird in den beiden Streifen der Mineralboden freigelegt und es verbleibt zwischen den beiden Streifen ein Mittelsteg aus gewachsenem Boden.

Das Verfahren hat den Vorteil, dass der Oberboden nur geringfügig verändert wird, sodass kaum Störungen des Bodenlebens eintreten (Kapillarität, Edafon, Struktur). Bei der Herstellung des Saatstreifens bleiben die Bodenhorizonte und Bodenstrukturen und die Bodenkapillarität im natürlichen Zustand erhalten. Je nach Baumart müssen die Samen unterschiedlich tief in den Mineralboden eingebracht werden können, um dort eine innige Verbindung zur Bodenfeuchte eingehen zu können. Dies ist Voraussetzung für eine vollständige Quellung und ein zügiges Keimen der Samen. Durch das erfindungsgemäße Verfahren ist der Saatstreifen in der erforderlichen Tiefe in den Mineralboden einbringbar. Der Saatstreifen befreit die Sämlinge von der Konkurrenz der Bodenvegetation in den ersten Jahren. Mit der Freilegung des Saatstreifens wird erreicht, dass je nach Baumart und Vegetationstyp die Konkurrenz durch die Bodenflora für mindestens drei bis fünf Jahre zurückgedrängt ist. Das Profil des Saatstreifens verschwindet erst etwa drei bis fünf Jahre nach Herstellung aufgrund der Witterung. Der abgeschälte und beidseitig abgelegte Bodenüberzug hat sich nach etwa fünf Jahren zersetzt, sodass er nicht zum Hindernis für nachfolgende Arbeiten werden kann. Zudem erhöht die doppelte Sämlingsreihe die Chancen für eine erfolgreiche Saat.

Der in der Mitte des Saatstreifens verbleibende Mittelsteg ist insbesondere bei sehr empfindlichen Baumarten (z.B. Tanne) keimphysiologisch von großer Bedeutung. Die Wirkung des Mittelstegs hält je nach Bodenart ein bis zwei Jahre an. Die Effekte des Mittelstegs können etwa wie folgt zusammengefasst werden:
Der Mittelsteg bewirkt einen Seitenschutz für die beidseitig des Mittelstegs ausgebrachten Samen bzw. Sämlinge vor Wind und Sonneneinstrahlung. Hierdurch wird das Keimbett vor Verdunstung geschützt.

Ferner fördert der Mittelsteg eine zusätzliche Wasserversorgung durch Tauanreicherung und einen Frostschutz.

Hangsickerwasser wird vom Mittelsteg zurückgehalten. Insgesamt begünstigt der Mittelsteg ein ausgeglichenes Mikroklima und schwächt Witterungsextreme ab. Dadurch wird der sehr sensible Keimvorgang wie auch das spätere Wachstum der Sämlinge wesentlich begünstigt.

Zudem wird eine über einen längeren Zeitraum wirksame Nährstoff- und Humusversorgung aus dem allmählich zerfallenden Mittelsteg erreicht.

Ferner können sich Akkumulationsbereiche aus Humus (Zusammenschwemmungen) aus dem sich auflösenden Mittelsteg herausbilden. Hierdurch werden "ökologische Nischen" mit deutlichen Wuchsvorteilen geschaffen, die zur positiven Differenzierung der Sämlinge beitragen.

Gemäß einer bevorzugten Ausgestaltung beträgt der Abstand zwischen den beiden äußeren Längsseiten der beiden Streifen 30 bis 50 cm und/oder die Tiefe jedes der beiden Streifen 5 bis 10 cm und/oder hat der Mittelsteg oben eine Breite von 1 bis 10 cm, vorzugsweise von etwa 5cm.

Gemäß einer weiteren Ausgestaltung haben die beiden Streifen jeweils ein flaches, U-förmiges Querschnittsprofil.

Gemäß einer weiteren Ausgestaltung wird der Saatstreifen fortlaufend in den Waldboden eingebracht.

Bei Anwendung des erfindungsgemäßen Geräts und Durchführung des erfindungsgemäßen Verfahrens kann das Saatgut entweder von Hand oder maschinell in den Saatstreifen eingebracht werden. Insbesondere ist es möglich, das Gerät mit einem Vorratsbehälter und einer Dosiervorrichtung für Saatgut auszurüsten, sodass das Saatgut während der Herstellung des Saatstreifens in diesen eingebracht wird. Es ist aber auch möglich, dass das Saatgut nach Herstellung des Saatstreifens von Hand oder mittels eines weiteren Geräts in den Saatstreifen eingebracht wird. Das Verfahren ist auch zur Induzierung der natürlichen Verjüngung verschiedener Nadelbaumarten geeignet. Dabei fällt Samen aus den umstehenden Altbäumen in den angelegten Saatstreifen hinein.

In dieser Anmeldung beziehen sich die Angaben "oben" und "unten" sowie "vorn" und "hinten" auf die Anordnung des Geräts mit den Rädern und den Scheiben auf dem Boden und mit dem Kupplungsmittel in Zugrichtung vor den Scheiben.

Die Erfindung wird nachfolgend anhand der anliegenden Zeichnungen eines Ausführungsbeispiels näher erläutert. In den Zeichnungen zeigen:
- Fig. 1: ein erfindungsgemäßes Scheibenräumgerät in einer Perspektivansicht schräg von hinten und von der Seite;
- Fig. 2: einen vorderen Teil des Scheibenräumgeräts in der Draufsicht;
- Fig. 3: einen Geräteträger des Scheibenräumgeräts in einer Draufsicht;
- Fig. 4: den Geräteträger in einer Ansicht von der linken Seite;
- Fig. 5: den Geräteträger in einer Ansicht schräg von hinten und von der Seite;
- Fig. 6: eine Scheibe des Geräteträgers in einer Seitenansicht;
- Fig. 7: die Scheibe in einem Vertikalschnitt;
- Fig. 8: die Scheibe in einer Perspektivansicht schräg von hinten;
- Fig. 9: Abstützen des Scheibenräumgeräts am Boden in einer Draufsicht;
- Fig. 10: Seitenkräfte auf das Scheibenräumgerät in einem Vertikalschnitt;
- Fig. 11: einen mit dem erfindungsgemäßen Scheibenräumgerät nach dem erfindungsgemäßen Verfahren hergestellten Saatstreifen.

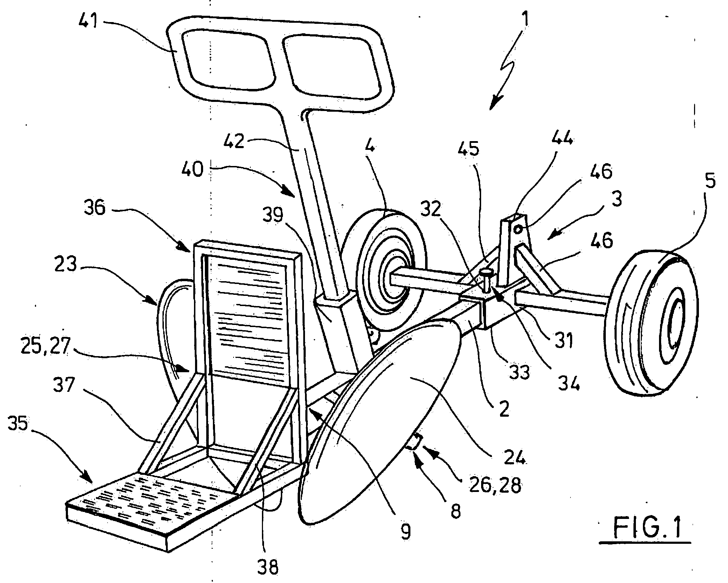

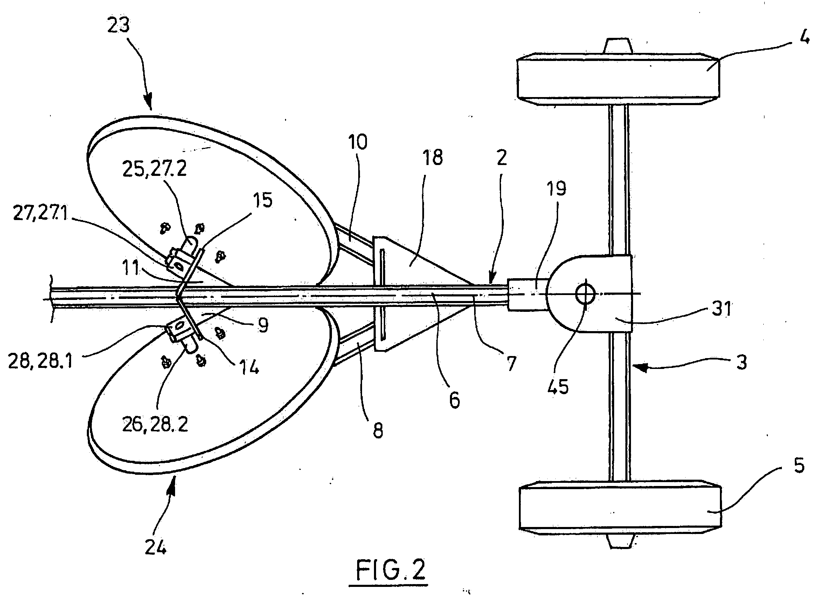

Gemäß Fig. 1 und 2 hat das Scheibenräumgerät 1 einen Geräteträger 2, der am vorderen Ende starr mit der Mitte einer Stützachse 3 verbunden ist. Die Stützachse 3 hat an jedem Ende ein drehbar gelagertes Rad 4, 5, das mit einer Gummibereifung versehen ist.

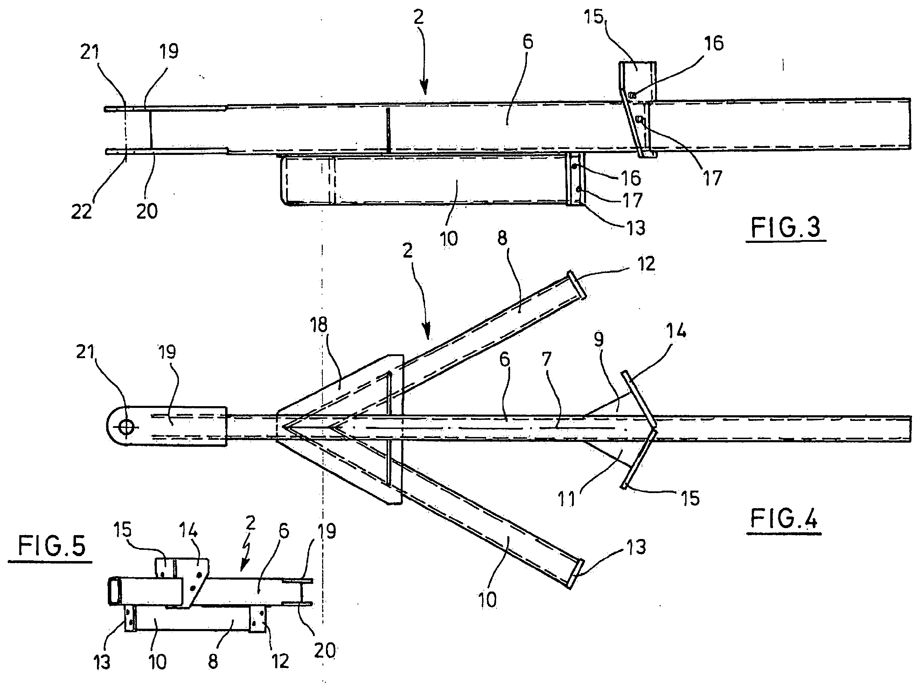

Gemäß Fig. 3 bis 5 umfasst der Geräteträger 2 einen ersten Profilträger 6, der als Vierkantprofil ausgeführt ist. Die Mittelachse des ersten Profilträgers 6 ist die Geräteträgerlängsachse 7. Auf beiden Seiten der Geräteträgerlängsachse 7 sind jeweils zwei parallele Scheibenträger 8, 9 und 10, 11 angeordnet. Die vorderen Scheibenträger 8, 10 sind zweite Profilträger. Die zweiten Profilträger 8, 10 sind ebenfalls Vierkantprofile.

Die vorderen zweiten Scheibenträger 8, 10 sind vorn mit der Unterseite des ersten Profilträgers 6 verbunden. An den hinteren Enden weisen sie senkrecht zu den Mittelachsen der zweiten Profilträger 8, 10 gerichtete Lagerplatten 12, 13 auf.

Die hinteren Scheibenträger 9, 11 sind Winkelbleche, welche jeweils den ersten Profilträger 6 oben, seitlich und unten einfassen und mit diesem fest verbunden sind. Die Winkelbleche 9, 11 umfassen jeweils eine vertikal ausgerichtete Lagerplatte 14, 15.

Sämtliche Lagerplatten 12, 13, 14, 15 sind um einen spitzen Winkel von etwa 33° nach vorn bezüglich der Längsmittelachse 7 des Geräteträgers geneigt.

Die Lagerplatten 12, 13, 14, 15 sind jeweils mit zwei Bohrlöchern 16, 17 zum Fixieren eines ersten Drehlagerelements versehen.

Zwischen dem ersten Profilträger 6 und den vorderen Abschnitten der zweiten Profilträger ist ein im Wesentlichen dreieckiges Versteifungsblech 18 vorhanden. Der Geräteträger 2 hat am vorderen Ende des ersten Profilträgers 6 oben und unten jeweils einen horizontalen Blechstreifen 19, 20, wobei die beiden Blechstreifen 19, 20 vorn vertikale und miteinander fluchtende erste Stecklöcher 21, 22 für einen Sicherungsbolzen aufweisen.

Der Geräteträger 2 ist eine Schweißkonstruktion aus Stahl.

Auf den beiden Seiten der Geräteträgerlängsachse 7 des Geräteträgers 2 ist jeweils eine schalenförmig gewölbte Scheibe 23, 24 am Geräteträger 2 drehbar gelagert. Die Drehachsen 25, 26 der beiden Drehlager 27, 28 sind bezüglich der Geräteträgerlängsachse 7 spitzwinklig nach vorn geneigt (im Beispiel um etwa 33°) und sind bezüglich der Horizontalen spitzwinklig geneigt (im Beispiel um etwa 35°).

Die Drehlager 27, 28 umfassen gemäß Fig. 1 und 2 erste Drehlagerelemente 27.1, 28.1, die am Geräteträger 2 fixiert sind und zweite Drehlagerelemente 27.2, 28.2, die an den Scheiben 23, 24 fixiert sind. Die ersten Drehlagerelemente 27.1, 28.1 sind Gleitlager. Die zweiten Drehlagerelemente 27.1, 28.1 umfassen Lagerwellen, die an den Scheiben 23, 24 fixiert und in Buchsen der Gleitlager 27.1, 28.1 drehbar gelagert sind.

Die ersten Drehlagerelemente 27.1, 28.1 weisen jeweils zwei Bohrlöcher auf. Jedes erste Drehlagerelement 27.1, 28.1 ist an einer Lagerplatte 12, 13, 14, 15 mittels Schrauben fixiert, welche die Bohrlöcher der des Drehlagerelements 27.1, 28.1 und die Bohrlöcher 16, 17 der Lagerplatte 12, 13, 14, 15 durchgreifen. Die Drehachsen 25, 26 sind danach in einem Winkel von etwa 35° zur Horizontalen ausgerichtet.

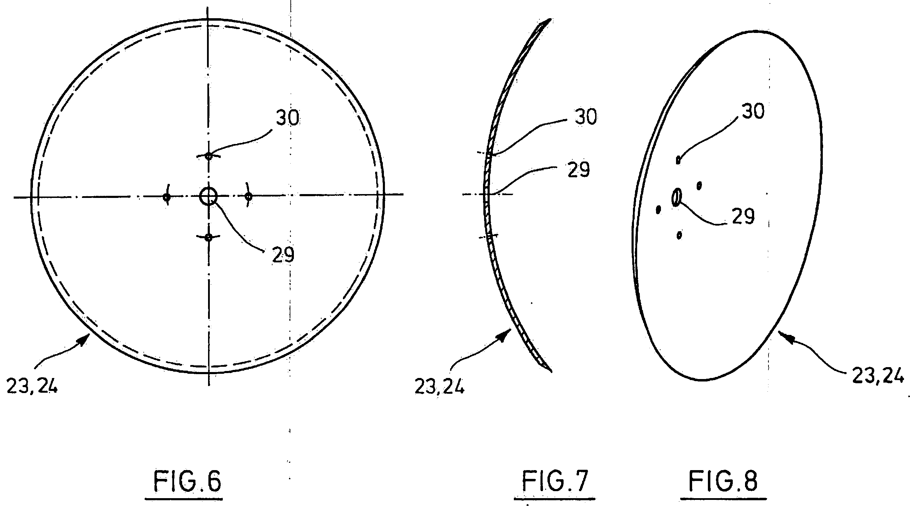

Jedes zweite Drehlagerelement 27.1, 28.1 weist eine Lagerwelle auf, die beidseitig von einer gewölbten Halteplatte vorsteht. Die Halteplatte weist vier Bohrlöcher auf. Jedes zweite Drehlagerelement 27.1, 28.1 ist mit einem Abschnitt der Lagerwelle auf einer Seite der Lagerplatte durch ein zentrales Loch 29 einer Scheibe 23, 24 hindurchgeführt, wie in Fig. 2 und 3 bis 8 gezeigt. Die Halteplatte ist mittels Schrauben an der Scheibe 23, 24 fixiert, die durch die vier Löcher der Halteplatte und vier Löcher 30 der Scheiben 23, 24 hindurchgeführt sind.

Die beiden Abschnitte der Lagerwelle auf den verschiedenen Seiten der Halteplatte sind auf verschiedenen Seiten der Scheibe 23, 24 in ersten Drehlagerelementen 27.1, 28.1 gelagert.

Die Stützachse 3 ist mittig mit einer ersten horizontalen Aufnahmebuchse 31 fest verbunden. Die erste Aufnahmebuchse 31 weist oben und unten vertikale zweite Stecklöcher 32, 33 für einen Sicherungsstift auf. Der Geräteträger 2 ist mit den Blechstreifen 19, 20 am vorderen Ende in die erste Aufnahmebuchse 31 eingesetzt und mittels eines ersten Sicherungsstiftes 34, darin gesichert, der in die Stecklöcher 32, 33, 21, 22 der ersten Aufnahmebuchse 31 und der Blechstreifen 19, 20 von oben eingesetzt ist.

Hinten ist das Scheibenräumgerät 1 mit einer horizontalen Gewichtsplattform 35 versehen, die mit dem hinteren Ende des Geräteträgers 2 fest verbunden ist. Vom vorderen Rand der Gewichtsplattform 35 steht vertikal eine Personenschutzwand 36 empor. Die Personenschutzwand 36 ist starr mit der Gewichtsplattform 35 und dem hinteren Ende des Geräteträgers 2 verbunden. Zur Versteifung sind zwischen den seitlichen Rändern der Gewichtsplattform 35 und der Personenschutzwand 36 geneigte Seitenstreben 37, 38 vorhanden.

Von der Oberseite des ersten Profilträgers 6 steht eine zweite Aufnahmebuchse 39 empor, die leicht nach hinten geneigt ist. Ein Griff 40 mit einem Griffbügel 41 am oberen Ende einer Griffstange 42 ist mit dem unteren Ende der Griffstange 42 in die zweite Aufnahmebuchse 39 eingesetzt und darin mittels eines zweiten Sicherungsstiftes 43 gesichert, der dritte und vierte Stecklöcher der zweiten Aufnahmebuchse 39 und der Griffstange 42 durchgreift.

Die Stützachse 3 weist mittig einen hochstehenden Kupplungskopf 44 auf, der über seitliche Streben 45, 46 versteift ist. Der Kupplungskopf 44 hat mehrere horizontale Löcher 46, die parallel zur Stützachse 3 ausgerichtet sind. Die Löcher 46 sind höhenversetzt. Sie bilden verschiedene Angriffspunkte für ein Zugmittel, das mit einer Zugkraftquelle verbindbar ist.

Die Zugkraftquelle, beispielsweise ein ausgebildetes Zugpferd, kann das Scheibenräumgerät 1 über einen Waldboden ziehen. Hierbei erzeugen die Scheiben 23, 24 einen Saatstreifen. Die Tiefe des Saatstreifens kann durch auf die Gewichtsplattform 35 aufgesetzte Gewichtsstücke oder durch das Körpergewicht des Geräteführers, der sich auf die Gewichtsplattform 35 stellt, beeinflusst werden.

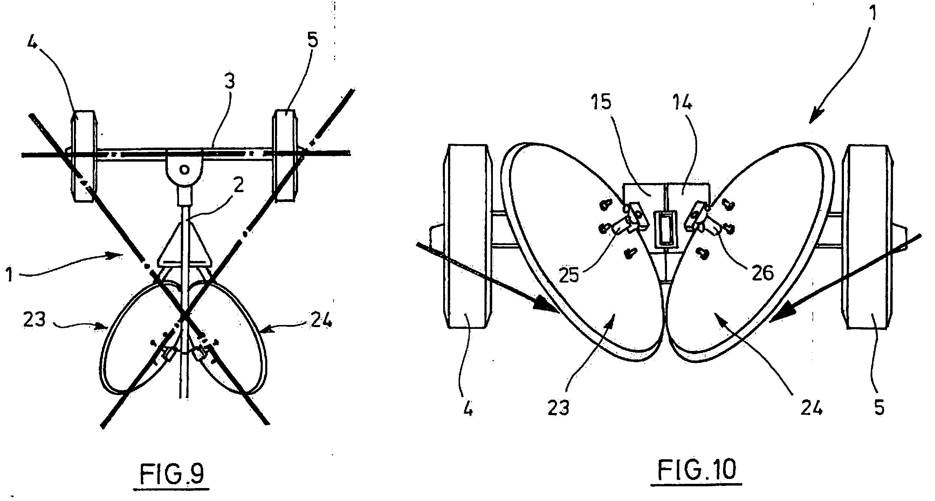

Beim Betrieb des Geräts 1 bilden die Räder 45 und der Aufstandspunkt der Scheiben 23, 24 ein stabiles Dreieck, wie in Fig. 9 veranschaulicht.

Gemäß Fig. 10 wird das Gerät so gesteuert bzw. richtet sich im Betrieb so aus, dass sich die auf die Scheiben wirkenden Seitenkräfte aufheben.

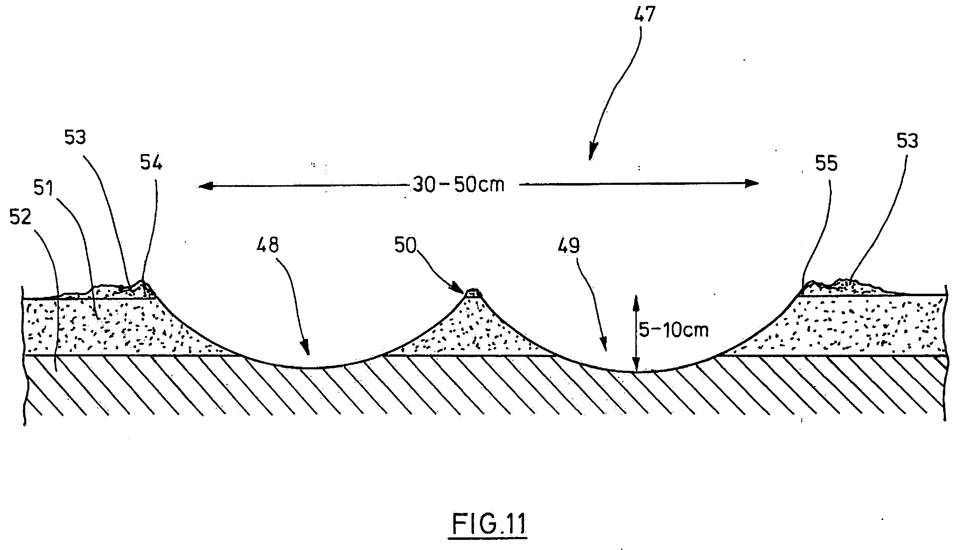

Gemäß Fig. 11 hat der mit dem Scheibenräumgerät hergestellte Saatstreifen 47 zwei flache, U-förmige Streifen 48, 49, zwischen denen ein Mittelsteg 50 ausgebildet ist. Aus den Streifen 48, 49 ist der Auflagehumus 51 verdrängt und die Mineralbodenschicht 52 freigelegt. Der verdrängte Auflagehumus 53 ist horizontal neben den beiden äußeren Längsseiten 54, 55 der beiden Streifen 48, 49 abgelegt, und zwar ohne gewendet und durchmischt zu werden. Die Tiefe der beiden Streifen 48, 49 und damit das Ausmaß des Eindringens der Streifen 48, 49 in die Mineralbodenschicht 52 ist durch Gewichtsbelastung des Geräts 1 steuerbar.

Die Breite des Saatstreifens 47 beträgt ca. 30 cm bis 50 cm und seine Tiefe ca. 5 cm bis 10 cm. Der Mittelsteg 50 hat eine Breite von vorzugsweise etwa 5 cm.

## Patentansprüche

1. Scheibenräumgerät zur Herstellung von Saatstreifen für die Waldsaat von Nadelbaumarten mit
- einem Geräteträger (1), der eine Geräteträgerlängsachse (7) aufweist,
- einer Stützachse (3) mit Rädern (4, 5) an den beiden Enden, die mit dem vorderen Ende des Geräteträgers (2) verbunden und quer zur Geräteträgerlängssachse (7) ausgerichtet ist,
- ersten Drehlagerelementen am Geräteträger (2) auf beiden Seiten der Geräteträgerlängsachse (7), die jeweils spitzwinklig nach vorn bezüglich der Geräteträgerlängsachse gerichtete Drehlagerachsen (27, 28) aufweisen,
- zwei schalenförmig gewölbten Scheiben (23, 24), die jeweils ein zentrales zweites Drehlagerelement aufweisen, das an einem ersten Drehlagerelement gelagert ist, wobei die beiden Scheiben (23, 24) auf verschiedene Seiten der Geräteträgerlängsachse (7) angeordnet und mit ihren bauchigen Seiten einander zugewandt sind,
- ein Kupplungsmittel (44) an der Stützachse (3) und/oder am Geräteträger (2) zum Ankuppeln einer Zugkraftquelle
**dadurch gekennzeichnet, dass**
- die Drehlagerachsen (27, 28) der ersten Drehlagerelemente spitzwinklig zur Horizontalen geneigt sind, so dass die beiden Scheiben (23, 24) am Tiefpunkt ihres Umfanges einander näher sind als am Hochpunkt ihres Umfanges,
- wobei sich das Gerät hinten nur über die Scheiben (23, 24) am Boden abstützt
- und wobei die Scheiben (23, 24) so angeordnet sind, dass zwei U-förmige Streifen (48, 49) mit einem Mittelsteg (50) aus gewachsenem Boden dazwischen erzeugt werden,
- einem Mittel zum Lagern (35) mindestens eines Gewichts am Geräteträger (2).

2. Scheibenräumgerät nach Anspruch 1, bei dem der Geräteträger (2) einen ersten Profilträger (6) aufweist, dessen vorderes Ende mit der Stützachse (3) verbunden ist.

3. Scheibenräumgerät nach Anspruch 1 oder 2, bei dem der Geräteträger (2) über erste Mittel zum lösbaren Verbinden (6, 32, 33, 34) lösbar mit der Stützachse (3) verbunden ist, wobei vorzugsweise das vordere Ende des ersten Profilträgers (6) in eine komplementäre erste Aufnahmebuchse (31) eingesetzt ist, die mit der Stützachse (3) fest verbunden ist, und bei dem ein erster Sicherungsstift (34) oder ein anderes erstes Sicherungselement das vordere Ende des ersten Profilträgers (6) in der ersten Aufnahmebuchse (31) sichert.

4. Scheibenräumgerät nach einem der Ansprüche 1 bis 3, bei der der Geräteträger (2) auf jeder Seite der Geräteträgerlängsachse (7) mindestens einen Scheibenträger (8, 9, 10, 11) aufweist, der eine spitzwinklig nach hinten bezüglich der Geräteträgerlängsachse (7) geneigte Scheibenträgerlängsachse hat und die ersten Drehlagerelemente jeweils am hinteren Ende eines Scheibenträgers (8, 9, 10, 11) angeordnet sind.

5. Scheibenräumgerät nach Anspruch 4 mit Scheibenträgern (8, 9, 10, 11), die jeweils einen zweiten Profilträger (8, 9) aufweisen, der vorn mit dem Geräteträger verbunden ist und hinten eine quer zur Scheibenträgerlängsachse gerichtete Lagerplatte (12, 13) aufweist, an der ein erstes Drehlagerelement (27.1, 28.1) befestigt ist.

6. Scheibenräumgerät nach Anspruch 4 oder 5, das auf jeder Seite der Geräteträgerlängsachse (7) zwei parallele Scheibenträger (8, 9, 10, 11) aufweist, an deren hinteren Enden jeweils ein erstes Drehlagerelement (27.1, 28.1) angeordnet ist, an denen eine Scheibe (23, 24) mit einem zweiten Drehlagerelement (27.1, 28.1) gelagert ist.

7. Scheibenräumgerät nach Anspruch 1, bei dem auf jeder Seite der Geräteträgerlängsachse (7) zwei parallele Scheibenträger (8, 9, 10, 11) angeordnet sind, wobei jeweils der vordere Scheibenträger (8, 9) vorn mit der Unterseite des ersten Profilträgers (6) fest verbunden ist und der hintere Scheibenträger (10, 11) weiter oben mit dem ersten Profilträger (6) fest verbunden ist.

8. Scheibenräumgerät nach einem der Ansprüche 1 bis 7, bei dem das Mittel zum Lagern (35) mindestens eines Gewichtes eine horizontale Gewichtsplattform aufweist, die hinter dem Geräteträger (2) angeordnet ist.

9. Scheibenräumgerät nach einem der Ansprüche 1 bis 8, das am vorderen Ende der Gewichtsplattform (35) eine hochstehende Personenschutzwand (36) aufweist.

10. Scheibenräumgerät nach einem der Ansprüche 1 bis 9, das vor der Gewichtsplattform (35) einen Griff (40) aufweist, der so positioniert ist, dass sich eine auf der Gewichtsplattform (35) stehende Person am Griff (40) festhalten kann.

11. Verfahren zum Herstellen von Saatstreifen für die Waldsaat von Nadelbaumarten, bei dem entlang zweier paralleler Streifen (48, 49) Auflagehumus (51) und Bodenvegetation, wenn vorhanden, von der Mineralbodenschicht (52) des Waldbodens abgeschert und an den äußeren Längseiten (54, 55) der beiden Streifen (48, 49) auf dem angrenzenden Waldboden abgelegt wird, wobei in den beiden Streifen (48, 49) die Mineralbodenschicht (52) freigelegt wird und zwischen den beiden Streifen (48, 49) ein Mittelsteg (50) aus gewachsenem Boden verbleibt.

12. Verfahren nach Anspruch 11, bei dem der Auflagehumus (51) aus seiner natürlichen Lagerung nur durch Anheben und horizontales seitliches Verlagern an den äußeren Längsseiten (54, 55) der beiden Streifen (48, 49) auf dem angrenzenden Waldboden abgelegt wird.

13. Verfahren nach Anspruch 11 oder 12, bei dem der Abstand zwischen den beiden äußeren Längsseiten (54, 55) der beiden Streifen (48, 49) 30 bis 50 cm beträgt und/oder bei dem die Tiefe jedes der beiden Streifen (48, 49) 5 bis 10 cm beträgt und/oder bei dem der Mittelsteg (50) oben eine Breite von 1 bis 10 cm aufweist, und/oder bei dem die beiden Streifen (48, 49) jeweils ein flaches U-förmiges Querschnittsprofil aufweisen.

14. Verfahren nach einem der Ansprüche 11 bis 13, bei dem der sich auflösende Mittelsteg die Sämlinge kontinuierlich mit Nährstoffen versorgt, und/oder bei dem der Saatstreifen die natürliche Verjüngung von Nadelbaumarten induziert und/oder dem Saatstreifen Saatgut zugeführt wird.

## Claims

1. A disc clearing machine for making seed tracts for the forest seeding of coniferous species, with
• an equipment carrier (1) having an equipment carrier longitudinal axis (7),
• a support axle (3) with wheels (4, 5) on the two ends, which is connected to the front end of the equipment carrier (2) and directed crosswise to the equipment carrier longitudinal axis (7),
• first rotary bearing elements on the equipment carrier (2) on both sides of the equipment carrier longitudinal axis (7), each comprising rotary bearing axles (27, 28) directed forwards at acute angles with respect to the equipment carrier longitudinal axis,
• two shell-like domed discs (23, 24), each one comprising a central second rotary bearing element which is bearing mounted on a first rotary bearing element, wherein the two discs (23, 24) are arranged at different sides of the equipment carrier longitudinal axis (7) and face each other with their bulbous sides,
• a coupling means (44) on the support axle (3) and/or on the equipment carrier (2) for coupling to a traction source,
**characterized in that**
• the rotary bearing axles (27, 28) are inclined to the horizontal at an acute angle, so that both discs (23, 24) at the lowest point of their circumference are closer to each other than at the highest point of their circumference,
• wherein the machine is supported on the ground at the rear side only by the discs (23, 24),
• and the discs (23, 24) are arranged such that two U-shaped grooves (48, 49) are formed with a middle track (50) of vegetated soil there between, and
• a means for bearing (35) at least one weight on the equipment carrier (2).

2. The disc clearing machine according to claim 1, wherein the equipment carrier (2) comprises a first profiled girder (6) whose front end is connected to the support axle (3).

3. A disc clearing machine according to claim 1 or 2, wherein the equipment carrier (2) is detachably connected to the support axle (3) via first means for detachable connection (6, 32, 33, 34), preferably the front end of the first profiled girder is inserted into a complementary first socket fitting (31) that is fixedly connected to the support axle (3), and wherein a first locking pin (34) or another first locking element locks the front end of the first profiled girder (6) in the first socket fitting (31).

4. A disc clearing machine according to any one of claims 1 to 3, wherein the equipment carrier (2) has at least one disc carrier (8, 9, 10, 11) on each side of the equipment carrier longitudinal axis (7), which has a disc carrier longitudinal axis that is acutely angled rearward with respect to the equipment carrier longitudinal axis (7), and the first rotary bearing elements are each arranged at the rear end of a disc carrier (8, 9, 10, 11).

5. The disc clearing machine according to claim 4, with disc carriers (8, 9, 10, 11) each comprising a second profiled girder (8, 9), which is connected to the equipment carrier at the front side, and comprises a bearing plate (12, 13) directed crosswise to the disc carrier longitudinal axis at the rear side, on which a first rotary bearing element (27.1, 28.1) is fastened.

6. A disc clearing machine according to claim 4 or 5, which has two parallel disc carriers (8, 9, 10, 11) on each side of the equipment carrier longitudinal axis (7), on whose rear ends one first rotary bearing element (27.1, 28.1) is arranged at a time, on which a disc (23, 24) is mounted by a second rotary bearing element (27.1, 28.1).

7. The disc clearing machine according to claim 1, wherein two parallel disc carriers (8, 9, 10, 11) are arranged on each side of the equipment carrier longitudinal axis (7), wherein the respective front disc carrier (8, 9) is fixedly connected to the lower side of the first profiled girder (6) at the front side, and the rear disc carrier (10, 11) is fixedly connected to the first profiled girder (6) higher up.

8. A disc clearing machine according to any one of claims 1 to 7, wherein the means for bearing (35) at least one weight comprises a horizontal weight platform which is located behind the equipment carrier (2).

9. A disc clearing machine according to any one of claims 1 to 8, which comprises an upright projecting person protection wall (36) at the front side of the weight platform (35).

10. A disc clearing machine according to any one of claims 1 to 9, which comprises a handle (40) before the weight platform (35), which is positioned such that a person standing on the weight platform (35) can hold him/herself fast on the handle (40).

11. A method for making seed tracts for forest seeding coniferous species, wherein litter layer (51) and ground vegetation, if existing, are sheared off from the mineral soil layer of the forest soil along two parallel grooves (48, 49) and deposited on the adjacent forest soil at the outer long sides (54, 55) of the two grooves (48, 49), wherein the mineral soil layer (52) is exposed in the two grooves (48, 49) and a middle track (50) of vegetated soil remains between the two grooves (48, 49).

12. The method according to claim 11, wherein the litter layer (51) is taken off from its natural layering only by lifting and horizontal lateral displacement to the adjacent forest soil on the outer long sides (54, 55) of the two grooves (48,49).

13. A method according to claim 11 or 12, wherein the distance between the two outer long sides (54, 55) of the two grooves (48, 49) is 30 to 50 cm, and/or wherein the depth of each of the two grooves (48, 49) is 5 to 10 cm, and/or wherein the middle track (50) has a width of 1 to 10 cm at its top side, and/or wherein the two grooves (48, 49) each have a flat U-shaped cross section profile.

14. A method according to any one of claims 11 to 13, wherein the middle track provides the seedlings with nutrients by dissolving itself and/or wherein the seed tract induces the natural rejuvenation of coniferous species, and/or seed is delivered to the seed tract.

## Revendications

1. Scarificateur à disques pour la fabrication de bandes de semences pour des semences forestières de conifères, comprenant
- un support d'outil (1) présentant un axe longitudinal de support d'outil (7),
- un axe d'appui (3) avec des roues (4, 5) aux deux extrémités, lesquelles sont reliées à l'extrémité avant du support d'outil (2) et orientées perpendiculairement à l'axe longitudinal de support d'outil (7),
- des premiers éléments de palier rotatif sur le support d'outil (2), des deux côtés de l'axe longitudinal de support d'outil (7), lesquels présentent respectivement des axes de palier rotatif (27, 28) orientés de manière à former des angles aigus vers l'avant par rapport à l'axe longitudinal de support d'outil,
- deux disques voûtés en forme de coquilles (23, 24) présentant respectivement un deuxième élément de palier rotatif central, lequel est monté sur un premier élément de palier rotatif, les deux disques (23, 24) étant agencés sur des côtés différents de l'axe longitudinal de support d'outil (7) et tournés l'un vers l'autre avec leurs côtés ventrus,
- un moyen d'accouplement (44) sur l'axe d'appui (3) et/ou sur le support d'outil (2), pour l'accouplement à une source de force de traction,
**caractérisé en ce que**
- les axes de palier rotatif (27, 28) des premiers éléments de palier rotatif sont inclinés en angles aigus par rapport à l'horizontale, de telle façon que les deux disques (23, 24) sont plus proches l'un de l'autre au niveau du point bas de leur pourtour qu'au point haut de leur pourtour,
- l'outil s'appuyant à l'arrière au sol uniquement par le biais des disques (23,24),
- et les disques (23, 24) étant agencés de manière à former entre eux deux bandes en forme de U (48, 49) avec une âme centrale (50) constituée de sol naturel,
- un moyen destiné au support (35) d'au moins un poids sur le support d'outil (2).

2. Scarificateur à disques selon la revendication 1, dans lequel le support d'outil (2) présente un premier support profilé (6) dont l'extrémité avant est reliée à l'axe d'appui (3).

3. Scarificateur à disques selon la revendication 1 ou 2, dans lequel le support d'outil (2) est relié de façon détachable à l'axe d'appui (3) par des premiers moyens de liaison détachables (6, 32, 33, 34), l'extrémité avant du premier support profilé (6) étant de préférence insérée dans une première douille de réception complémentaire (31) reliée fixement à l'axe d'appui (3), et une première goupille de sécurité (34) ou un autre premier élément de sécurité bloquant l'extrémité avant du premier support profilé (6) dans la première douille de réception (31).

4. Scarificateur à disques selon l'une des revendications 1 à 3, dans lequel le support d'outil (2) présente au moins un support de disque (8, 9, 10, 11) de chaque côté de l'axe longitudinal de support d'outil (7), lequel présente un axe longitudinal de support d'outil incliné en angle aigu vers l'arrière par rapport à l'axe longitudinal de support d'outil (7), et les premiers éléments de palier rotatif sont agencés respectivement à l'extrémité arrière d'un support de disque (8, 9, 10, 11).

5. Scarificateur à disques selon la revendication 4, comprenant des supports de disque (8, 9, 10, 11) présentant respectivement un deuxième support profilé (8, 9) relié à l'avant au support d'outil et présentant à l'arrière une plaque d'appui (12, 13) orientée perpendiculairement à l'axe longitudinal de support de disque, sur laquelle est fixé un premier élément de palier rotatif (27.1, 28.1).

6. Scarificateur à disques selon la revendication 4 ou 5, présentant deux supports de disque parallèles (8, 9, 10, 11) de chaque côté de l'axe longitudinal de support d'outil (7), à l'extrémité arrière desquels est respectivement agencé un premier élément de palier rotatif (27.1, 28.1), sur lesquels est monté un disque (23, 24) avec un deuxième élément de palier rotatif (27.1, 28.1).

7. Scarificateur à disques selon la revendication 1, dans lequel deux supports de disque parallèles (8, 9, 10, 11) sont agencés de chaque côté de l'axe longitudinal de support d'outil (7), le support de disque avant (8, 9) étant respectivement relié fixement au côté inférieur du premier support profilé (6) à l'avant, et le support de disque arrière (10, 11) étant relié fixement plus en hauteur au premier support profilé (6).

8. Scarificateur à disques selon l'une des revendications 1 à 7, dans lequel le moyen destiné au support (35) d'au moins un poids présente une plateforme à poids horizontale agencée derrière le support d'outil (2).

9. Scarificateur à disques selon l'une des revendications 1 à 8, présentant une paroi de protection personnelle verticale (36) à l'extrémité avant de la plateforme de poids (35).

10. Scarificateur à disques selon l'une des revendications 1 à 9, présentant une poignée (40) devant la plateforme de poids (35), laquelle est positionnée de manière à ce qu'une personne debout sur la plateforme de poids (35) puisse se tenir à la poignée (40).

11. Procédé de fabrication de bandes de semences pour des semences forestières de conifères, dans lequel, le long de deux bandes parallèles (48, 49), de l'humus de surface (51) et un couvert de végétation, si présents, sont prélevés à partir de la couche de sol minéral (52) du sol forestier et déposés sur les côtés longitudinaux externes (54, 55) des deux bandes (48, 49) sur le sol forestier adjacent, la couche de sol minéral (52) étant dégagée dans les deux bandes (48, 49), et une âme centrale (50) constituée de sol naturel demeurant entre les deux bandes (48, 49).

12. Procédé selon la revendication 11, dans lequel l'humus de surface (51) est déposé, à partir de sa position naturelle, sur le sol forestier adjacent uniquement par soulèvement et déplacement latéral horizontal sur les côtés longitudinaux externes (54, 55) des deux bandes (48, 49).

13. Procédé selon la revendication 11 ou 12, dans lequel l'espacement entre les deux côtés longitudinaux externes (54, 55) des deux bandes (48, 49) mesure de 30 à 50 cm, et/ou dans lequel la profondeur de chacune des deux bandes (48, 49) mesure de 5 à 10 cm, et/ou dans lequel l'âme centrale (50) présente une largeur de 1 à 10 cm sur le haut, et/ou dans lequel les deux bandes (48, 49) présentent respectivement un profil de coupe transversale plat en forme deU.

14. Procédé selon l'une des revendications 11 à 13, dans lequel l'âme centrale en dissolution alimente continuellement les semis en nutriments, et/ou dans lequel la bande de semences induit la régénération naturelle des conifères, et/ou dans lequel des semences sont fournies à la bande de semences.
